# EUROPEAN PATENT APPLICATION

(11) **EP 4 219 359 A1**
(43) Date of publication of application: **02.08.2023**
(21) Application number: 23153255.7
(22) Date of filing: 25.01.2023
(51) Int. Cl.: B65G 54/02, B60L 13/03, F16C 29/00, F16C 29/04

(54) **CONVEYOR SYSTEM AND MOVING ELEMENT WITH ARTICULATED BEARINGS**

(30) Priority: 26.01.2022 US 202263303253 P
(71) Applicant: ATS Corporation, Cambridge ON N3H 4R7 (CA)
(72) Inventor: HOGAN, Roger, Cambridge, Ontario, N3H 4R7 (CA); LAMBERT, Blake Robert, Cambridge, Ontario, N3H 4R7 (CA); BRUNETTI, Alessandro, RA 48014 Castel Bolognese (IT); JURITSCH, Martin, Cambridge, Ontario, N3H 4R7 (CA); KLEINIKKINK, Albert John, Cambridge, Ontario, N3H 4R7 (CA)
(74) Representative: Ipey

(57) **Abstract**

A conveyor system (100) and a moving element (104) therefor, wherein the moving element includes: a body; at least one canted bearing (130) configured to abut against a first portion of a first guide rail (108) of the conveyor system; and an articulation mechanism provided to the body that allows the canted bearing to rotate so that a line of contact of the canted bearing with the first guide rail remains at 90 degrees to a direction of travel of the canted bearing and parallel to an axis of rotation of the canted bearing. The articulation mechanism may include a bearing body (140) and a third bearing (135), wherein the bearing body supports the canted bearing and rotates about an articulation axis, or may include a trunnion (910) and a trunnion support (915) with a virtual pivot at a center of contact of the canted bearing and the guide rail.

## Description

### FIELD

The present disclosure relates generally to linear motor conveyor systems and bearing systems for moving elements on a linear motor conveyor. More particularly, the disclosure relates to a linear motor conveyor and moving element with articulated bearings.

### BACKGROUND

In conventional linear motor conveyors or systems, a moving element is controlled to move along a track by electromotive force. In a moving magnet linear motor, the moving element typically includes a magnet that interacts with the magnetic field produced from stationary coils on the track to propel the moving element along the track. In order to allow movement, the moving element generally has one or more bearings, which run along the track and are supported by guide rails or the like on the track. The bearings are provided to the moving element such that the moving element can move along the track/guide rails while a bearing surface of the bearing is in contact with the guide rail. Depending on the application, the bearings may include, for example, wheels, rollers, plain bearings, ball bearings, needle bearings, roller bearings and the like.

Conventional linear motor conveyor systems include moving elements that may include a bearing or a set of bearings on a first rail and a bearing or set of bearings on a second rail. One of the issues that arises in moving elements of this type is when the moving element moves around a curve. If the bearings are not set a correct distance apart, or if the tolerance and compliance in the moving element are not adequate, or if the moving element doesn't have enough clearance from the track to allow the bearings to maintain contact with the guide rails, one or more of the bearings may lose contact with the guide rails/track. Further, in some cases, the moving element also needs to be close enough to the track to maintain a magnetic connection to the track. As such, smaller bearings sometimes cannot be used to provide clearance to allow for curvature of the track.

In other conventional linear motors, there may be bearings in contact with a rail where that contact is angled with respect to the axis of rotation of that bearing. In these cases, the angled bearing surfaces and the rail may have increased wear, particularly when travelling around curves in the track. In some cases, lubrication can be used to help reduce wear but there may also be situations where the use of lubrication can be difficult or not allowed.

In view of the above considerations and issues with conventional linear motor conveyors, there is a need for an improved linear motor conveyor system and, in particular, for a linear motor conveyor system having a moving element with an improved bearing system.

### SUMMARY

According to an aspect herein, there is provided a moving element for a conveyor system, the moving element including: a body; at least one canted bearing configured to abut against a first portion of a first guide rail of the conveyor system; and an articulation mechanism provided to the moving element that allows the at least one canted bearing to rotate so that a line of contact of the at least one canted bearing with the first guide rail remains at 90 degrees to a direction of travel of the at least one canted bearing and parallel to an axis of rotation of the at least one canted bearing.

In some cases, the moving element may further include at least one second bearing attached to the body and configured to abut against a second guide rail of the conveyor system.

In some cases, the articulation mechanism may include at least one third bearing configured to abut against a second portion of the first guide rail and a bearing body connecting the at least one canted bearing and the at least one third bearing such that the bearing body is configured to rotate about an articulation axis.

In some cases, the articulating mechanism may include a trunnion provided to the at least one canted bearing and a trunnion support provided to the moving element wherein a virtual pivot of the trunnion is positioned at a center of contact of the at least one canted bearing with the first guide rail.

In some cases, the at least one canted bearing may include a top canted bearing and a bottom canted bearing forming a pair of opposed canted bearings and the first portion of the first guide rail may include a top angled portion and a bottom angled portion wherein the top canted bearing abuts against the top angled portion and the bottom canted bearing abuts against a bottom angled portion. In some cases, the top angled portion and bottom angled portion of the guide rail may form a "V" shaped profile. In the cases where there is a second portion of the first guide rail, the top angled portion, second portion, and bottom angled portion of the guide rail may form a "V" shaped profile.

A conveyor system including: at least one track section including a first guide rail; at least one moving element including: a body; at least one canted bearing configured to abut against a first portion of a first guide rail of the conveyor system; and an articulation mechanism provided to the moving element that allows the at least one canted bearing to rotate so that a line of contact of the at least one canted bearing with the first guide rail remains at 90 degrees to a direction of travel of the at least one canted bearing and parallel to an axis of rotation of the at least one canted bearing.

In some cases, the conveyor system may further include at least one second bearing attached to the body and configured to abut against a second guide rail of the conveyor system.

In some cases, the articulation mechanism may include at least one third bearing configured to abut against a second portion of the first guide rail and a bearing body connecting the at least one canted bearing and the at least one third bearing such that the bearing body is configured to rotate about an articulation axis.

In some cases, the articulating mechanism may include a trunnion provided to the at least one canted bearing and a trunnion support provided to the moving element wherein a virtual pivot of the trunnion is positioned at a center of contact of the at least one canted bearing with the first guide rail.

In some cases, the at least one canted bearing may include a top canted bearing and a bottom canted bearing forming a pair of opposed canted bearings and the first portion of the first guide rail may include a top angled portion and a bottom angled portion wherein the top canted bearing abuts against the top angled portion and the bottom canted bearing abuts against a bottom angled portion. In some cases, the top angled portion and bottom angled portion of the guide rail may form a "V" shaped profile. In the cases where there is a second portion of the first guide rail, the top angled portion, second portion, and bottom angled portion of the guide rail may form a "V" shaped profile.

In some cases, the conveyor system may include a plurality of the at least one canted bearing and a plurality of the articulation mechanism, one for each of the plurality of the at least one canted bearing.

In some cases, the second bearing and the second guide rail may have a flat profile.

A conveyor system including: at least one track section including: a first guide rail having a shaped profile; and a second guide rail having a flat profile; at least one moving element including: a body; a first set of bearings wherein the first set of bearings may include: a bearing body attached to the body; at least one canted bearing provided to the bearing body and configured to abut against a first portion of the first guide rail; and at least one central bearing provided to the bearing body and configured to abut against a second portion of the first guide rail; wherein the bearing body is configured to rotate about an articulation axis allowing the at least one canted bearing and at least one central bearing to maintain contact with the first guide rail as the moving element moves around a corner on the conveyor system; and a second set of bearings attached to the body and configured to abut against the second guide rail.

In some cases, the first set of bearings may further include a second canted bearing arranged opposite to the at least one canted bearing to form a pair of canted bearings with the second canted bearing abutting a third portion of the first guide rail. In this case, the first, second, and third portions of the first guide rail may form a "V" shaped profile. The pair of canted bearings will then form an opposite "V" shape to correspond with the first guide rail.

According to another aspect herein, there is provided a moving element for a linear motor conveyor system, the moving element including: a body; at least one canted bearing configured to abut against an angled first portion of a first guide rail of the conveyor system; and an articulating mechanism provided to the moving element that allows the at least one canted bearing to rotate such that a line of contact of the at least one canted bearing with the first guide rail remains at 90 degrees to a direction of travel of the at least one canted bearing and also parallel to an axis of rotation of the at least one canted bearing.

In some cases, the articulation mechanism may include at least one third bearing configured to abut against a second portion of the first guide rail and a bearing body connecting the at least one canted bearing and the at least one third bearing such that the bearing body is configured to rotate about an articulation axis.

In some cases, the conveyor system may include a second set of bearings attached to the body and configured to abut against a second guide rail. In this case, the second set of bearings may have a flat profile and the second guide rail may have a flat profile.

Other aspects and features of the present disclosure will become apparent to those ordinarily skilled in the art upon review of the following description of specific embodiments in conjunction with the accompanying figures.

### BRIEF DESCRIPTION OF FIGURES

Embodiments of the present disclosure will now be described, by way of example only, with reference to the attached Figures.
Figure 1 illustrates a linear motor conveyor system according to an embodiment;
Figure 2A is a front view of an embodiment of a track of a linear motor conveyor;
Figure 2B is a cut-away perspective view of an embodiment of a track section for a linear motor conveyor;
Figure 2C is a detailed view of an embodiment of a first rail of the track section of Fig. 2B;
Figure 2D is a detailed view of an embodiment of a second rail of the track section of Fig. 2B;
Figure 3A is a perspective front view of an embodiment of a moving element for a linear motor conveyor;
Figure 3B is a front view of the moving element of Fig. 3A;
Figure 4A is a rear view of an embodiment of the first set of bearings for the moving element of Fig. 3A;
Figure 4B is a top transparent view of an embodiment of the first set of bearings of Fig. 4A, when on a straight track;
Figure 4C is a top transparent view of an embodiment of the first set of bearings of Fig. 4A, when on a curved track;
Figure 5 illustrates a top view of a curved track section with an embodiment of a moving element/bearing system showing the change in angle of the bearings;
Figure 6 illustrates an embodiment of a moving element in which both the first and second sets of bearings are articulated similarly for maintaining contact with guide rails on a curved track section;
Figure 7A illustrates an alternate embodiment of a bearing system in which central bearings are on separate tracks;
Figure 7B illustrates the bearing system of Fig. 7A on a curved track section;
Figure 8 illustrates an embodiment of a moving element in which both the first and second sets of bearings are articulated similarly or identically and are configured to operate both on shaped guide rails;
Figure 9A is a perspective view of another embodiment of a moving element with a trunnion steering mechanism;
Figure 9B is a perspective view of the moving element of Fig. 9A with an upper set of bearing removed;
Figure 9C is a top view of the moving element of Fig. 9A, illustrating movement of the trunnion;
Figure 9D is a side view of the moving element of Fig. 9A, illustrating the axis of rotation of the trunnion;
Figure 10A is a perspective view of another embodiment of a moving element with flexible supports;
Figure 10B illustrates the moving element of Fig. 10A on a straight track section; and
Figure 10C illustrates the moving element of Fig. 10A on a curved track section.

### DETAILED DESCRIPTION

Generally, the present disclosure is directed to a linear motor conveyor system having articulated bearings to provide for smoother movement and handling on curved track sections. In particular, a moving element on the conveyor system is configured with an articulated bearing system allowing the bearings to flex, move, articulate or otherwise adapt as the moving element travels around curves. In some cases, the articulated bearing system may allow the moving element to move in a way that has very limited or no wear and may not require lubricant to operate.

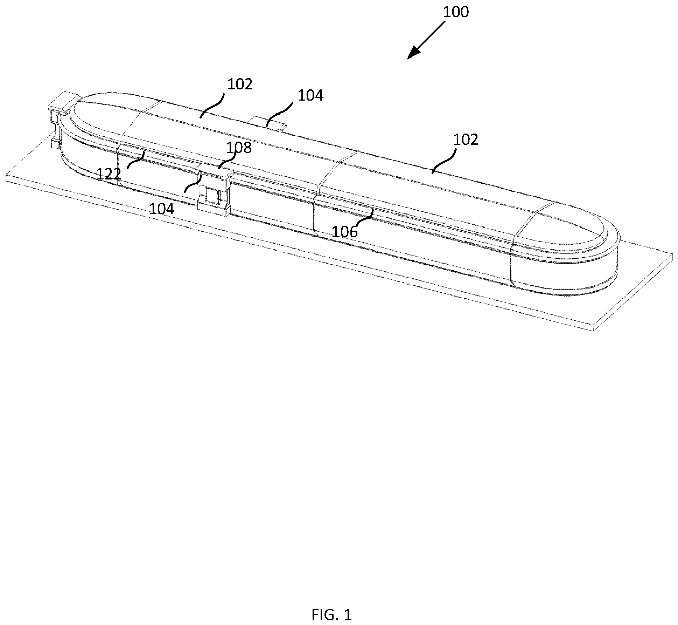

Figure 1 illustrates an example of a linear motor conveyor system 100 having one or more track sections 102, 103 defining a track 106, and one or more moving elements 104 which are configured to ride or travel along the track 106. In Figure 1, there are two straight track sections 102, and two curved track sections 103, and two moving elements 104. Some of the principles of operation of a similar track section are described in more detail in U.S. Patent No. 8,397,896 to Kleinikkink et al., which is hereby incorporated herein by reference.

In one example, the conveyor system 100 may include a plurality of track sections 102, which are mechanically self-contained and separable from one another so as to be modular in nature. In some embodiments, the track sections 102, 103 are mounted on a support (not shown) so as to align and abut one another in order to form a longer track. In order to be modular, each track section 102, 103 may house electronic circuitry for powering and controlling the track section 102, 103.

The conveyor system 100 includes the track 106 that produces a magnetic force for moving the moving element 104 along the track 106. In some cases, the magnetic force is also configured to capture, support or hold the moving element 104 on the track 106. The magnetic force is at least partly generated by the interaction of the magnetic flux created by the embedded coils of the track 106 and magnetic elements of the moving element 104.

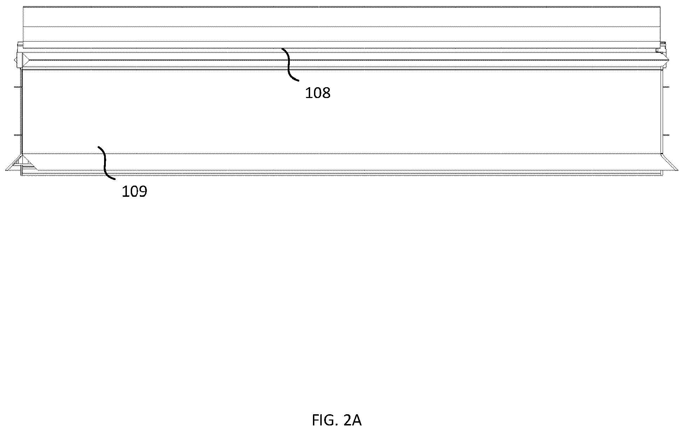

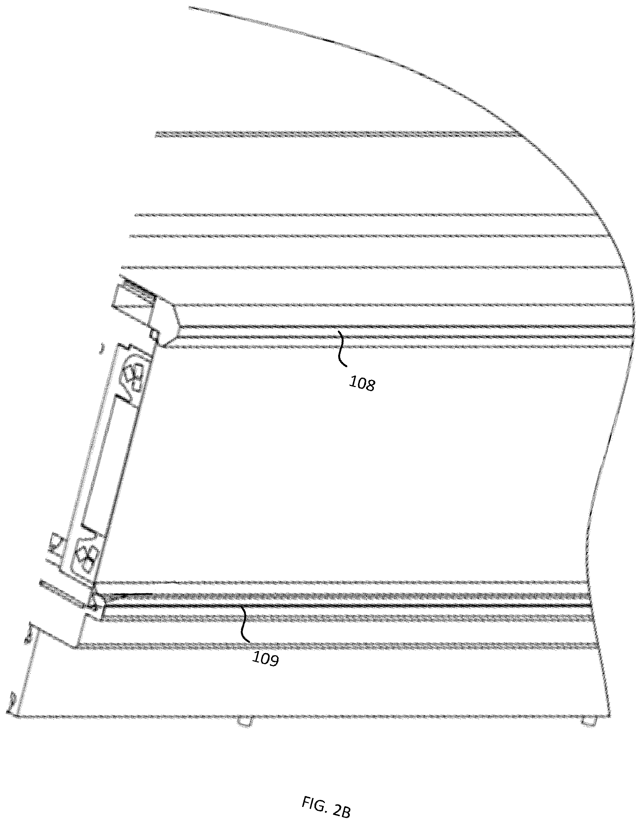

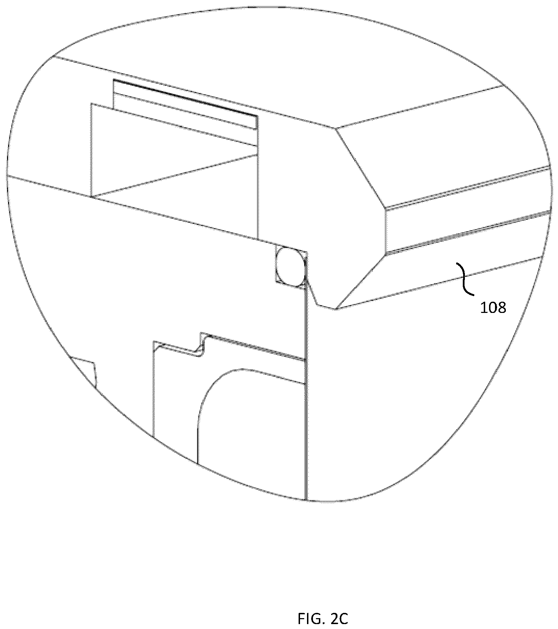

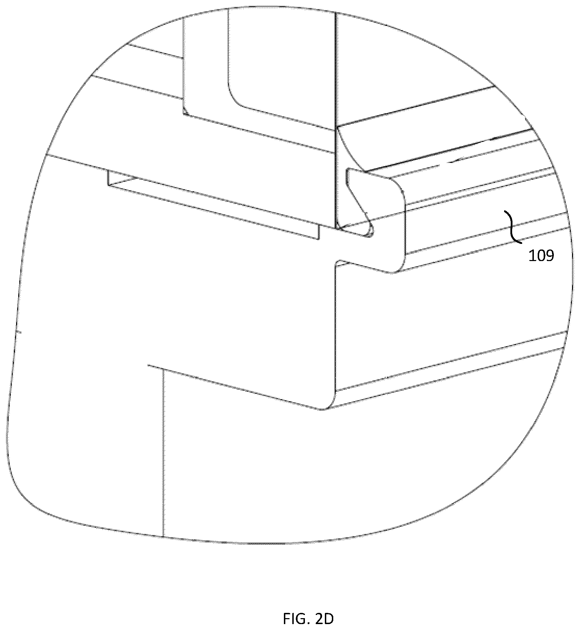

Figures 2A to 2D illustrate various views of a track section 102 and track 106. The track 106 includes a first guide rail 108 and a second guide rail 109 configured to support the moving element 104. The first and second guide rails 108, 109 are configured such that the moving element 104 may be removed from the track 106 when the magnetic force is overcome. The magnetic force is overcome, for example, where a user pries the moving element 104 away from the track 106. In an alternative, the moving element 104 may be removed from the track 106 where the magnetic force is reversed, reduced, or removed. In particular, in some embodiments, the guide rails 108, 109 have an open shape so that the bearings interacting with the guide rails 108, 109 engage with the guide rails 108, 109 in a way such that the bearings are not locked or held onto the guide rails 108, 109 other than by a magnetic force between moving element and the track.

In this embodiment, the first guide rail 108 has a contour such that it supports the moving element 104 vertically and horizontally. The first guide rail 108 may have a protrusion or shaped profile to support and guide the moving element 104 on the track 106, for example, a "V" shape or a "U" shape or the like. In the figures, the first guide rail 108 is shown with a "V" shape. In this embodiment, the second guide rail 109 is flat and supports the moving element 104 at least horizontally. The second guide rail 109 may alternatively also have a protrusion or be shaped, such as a "V" or "U" shape or the like. It will be understood that the first guide rail and second guide rail may have other shapes as appropriate to support the moving element 104. The use of the terms "V" or "U" shaped are just examples.

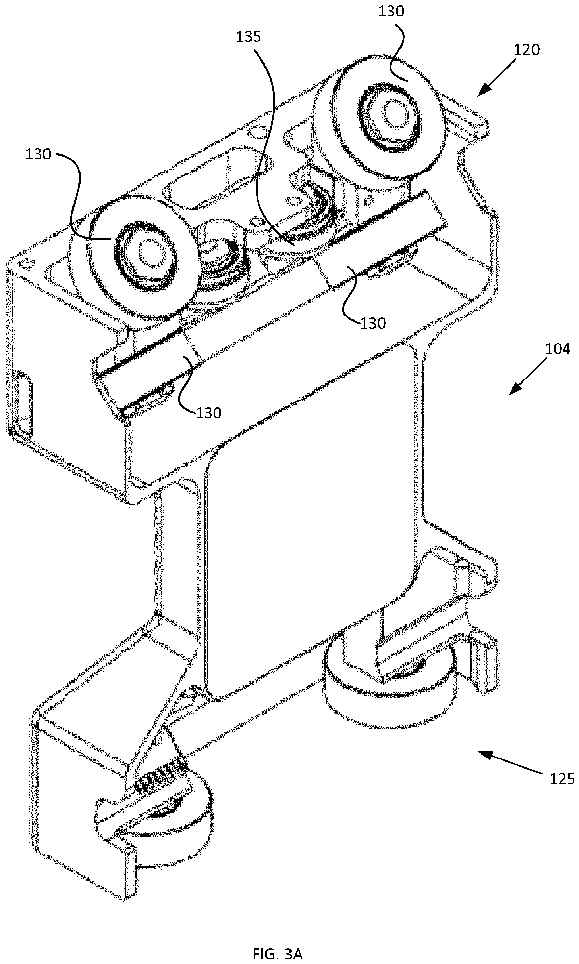

Figures 3A to 3B illustrate an embodiment of a moving element 104 associated with the linear motor conveyor system 100. In this embodiment, the moving element 104 includes a bearing system 115 and an articulation mechanism. The bearing system 115 includes a first set of bearings 120 and a second set of bearings 125. In this embodiment, the first and second set of bearings 120, 125 are wheel bearings that are rotatably attached to the moving element 104. In other embodiments, other types of bearings may be used.

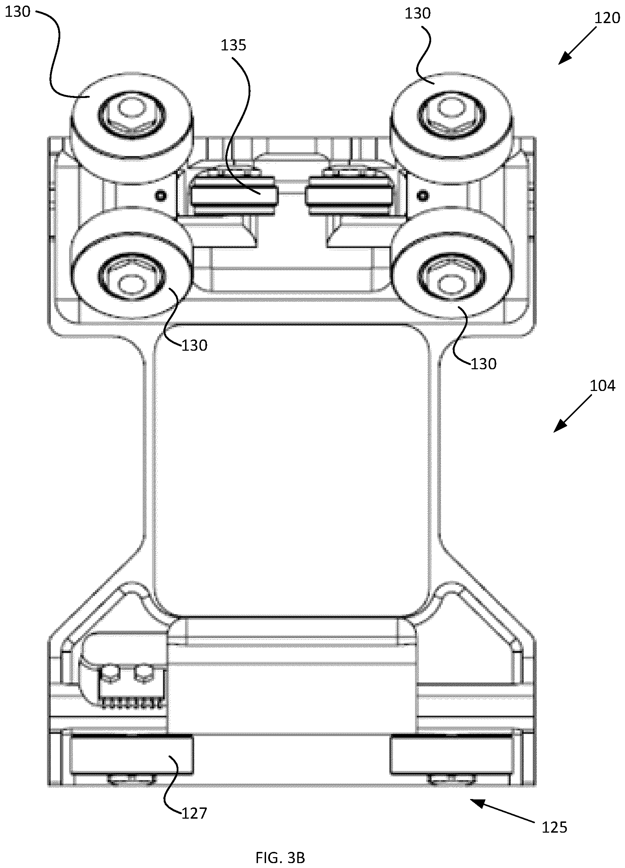

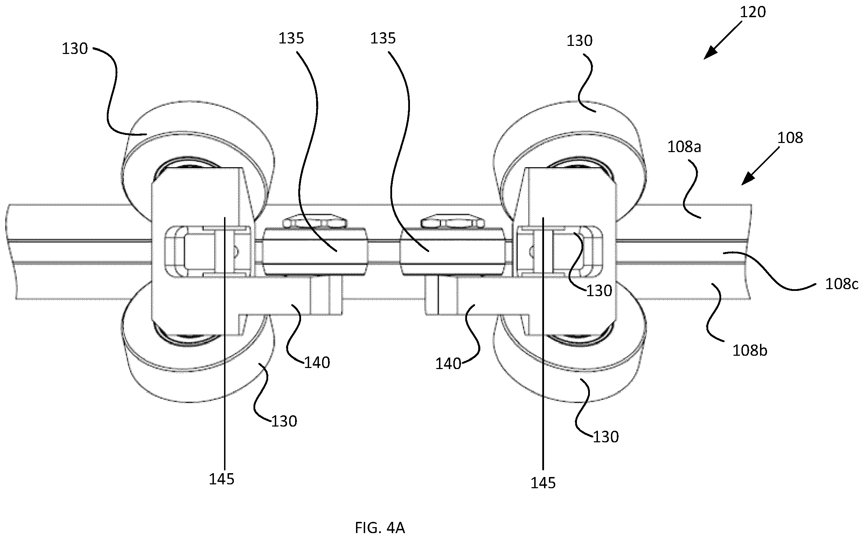

The first set of bearings 120 includes at least one canted bearing 130 that is configured at an angle corresponding to the shaped profile of the first guide rail 108. In the case of a shaped profile, the at least one canted bearing 130 may be canted to contact a shaped portion of the guide rail. For a "V" shaped guide rail, the canted bearing 130 may contact an upper or lower portion of arms of the "V" of the shaped profile 108a/108b (illustrated in Figs. 4A-C and sometimes referred to as a first portion or first and third portion of the guide rail). It will be understood that in embodiments herein, there may just be one canted bearing, typically arranged to abut a upper portion of a shaped guide rail, but in the embodiment shown in Fig. 3A, there are two pairs of canted bearings, each pair forming a reversed "V" configured to abut against the top and bottom of the "V" shaped profile of the first guide rail 108 and further, the pairs of canted bearings 130 are arranged with one pair generally at a front of the moving element and one generally at a rear of the moving element 104. Having the canted bearings 130 at an angle and with an axis of rotation parallel to the related contact surface is intended to reduce the wear or deterioration due to friction relative to bearings whose axis of rotation is not parallel with the contact surface, such as a single bearing that contacts multiple facets of the contour of the first rail 108 or a bearing profile that is non-flat. As noted herein, the first set of bearings 120 may include two or more pairs of bearings located opposite one another to provide for the "V" shaped angle. In this particular case, the canted bearings 130 can be angled in such a manner to contact the shaped first guide rail 108 while supporting the moving element 104 along both a Y axis (e.g. horizontally) and a Z axis (e.g., vertically). In certain cases, such as that shown in Fig. 3A, the moving element 104 may have two pairs of canted bearings that may be separated around a center vertical axis of the moving element. Further, in some cases, again as shown in Fig. 3A, the first set of bearings 120 can further include at least a third bearing 135 that runs on a central flat portion 108c (illustrated in Figs. 4A-C) of the first guide rail 108. In Figs. 3A and 3B, there are two third bearings 135, each of which is associated with a pair of canted bearings 130.

The second set of bearings 125 ride on the second guide rail 109. The second set of bearings 125 has an edge profile that corresponds to the profile of the second guide rail 109. In Figs. 3A and 3B, the second set of bearings 125 includes a flat bearing 127 that has a flat profile (e.g., a flat wheel) that matches the flat profile of the second guide rail 109. The second set of bearings 125 may roll a bit higher or lower on the second guide rail 109 to adapt to any non-parallelism of or with the first guide rail 108. In some cases, the second set of bearings 125 may just be a single bearing, generally centrally located on the moving element 104.

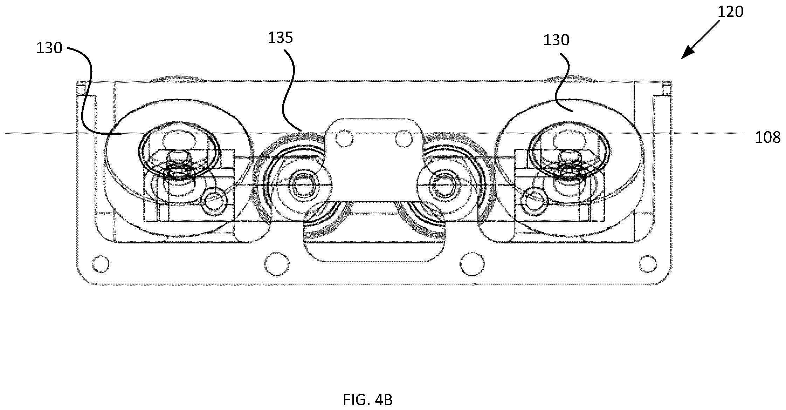

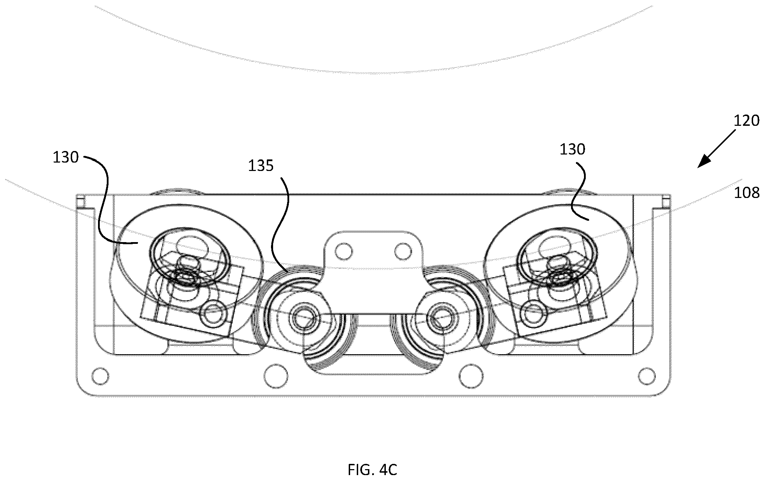

Figs. 4A to 4C illustrate the bearing system 115 in further detail and when on a straight and curved track. As shown in Fig. 4A, each third bearing 135 is attached with a related pair of canted bearings 130 via a bearing body 140. The bearing body 140 is supported by the moving element 104 such that the bearing body 140 can rotate around an articulation axis 145 that is located between the third bearing 135 and the canted bearings 130. In this embodiment, the bearing body 140 and connection with the bearings at articulation axis 145 can be considered an articulation mechanism. As shown in Figs. 4B and 4C, when on a straight track section the bearing body 140 is in one orientation but on a curved track section, the bearing body 140 can rotate about the articulation axis 145 such that the third bearing 135 and canted bearings 130 conform better to the shape of the curved track section and are intended to maintain contact with the first guide rail 108 on a curve. The articulation mechanism may also help compensate for any irregularities, tolerance issues or the like on a straight track section.

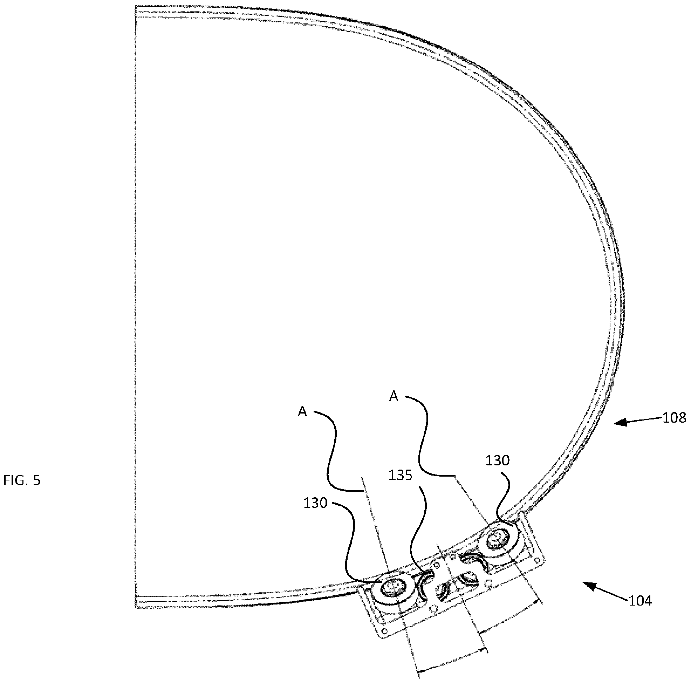

Fig. 5 illustrates the articulation of the canted bearings 130 on a curved track section and a change in orientation of the canted bearings 130 such that a line of contact ("A") of the canted bearings 130 with the rail remains at 90 degrees to the direction of travel of the canted bearings 130 and also parallel to the axis of rotation of the canted bearings even as the moving element 104 moves around a curved track section. Further, as illustrated, the orientation of each set of canted bearings 130 is controlled by independent third bearings 135 such that differences in the curvature of the first rail at one set of canted bearings 130 compared to the other set of canted bearings 130 can be handled, for example, at the beginning of the curved track section or if a variable profile is used for the track section. This arrangement of allowing articulation of the canted bearings can provide that there will be reduced or no scuffing and thus reduced or no wear on the canted bearings on curves, even without lubricant.

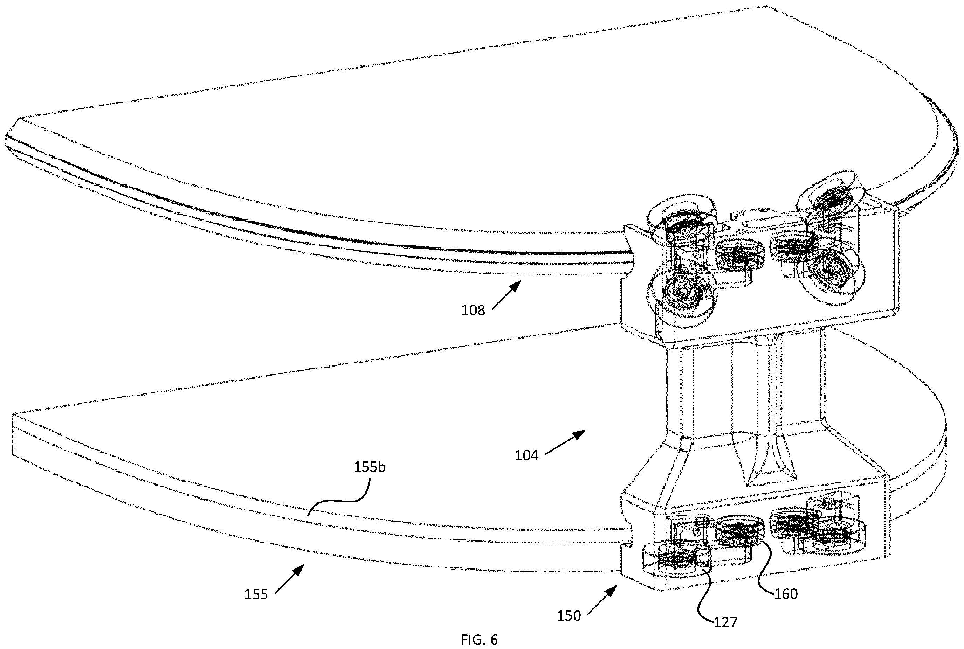

Figure 6 illustrates an embodiment of a moving element in which both the first set of bearings 120 is as provided above and an alternate second set of bearings 150 are provided and configured to be articulating about coincident axes as the first set for maintaining contact with a guide rail 155 similar to the guide rail 109 on a curved track section. In this embodiment, the second set of bearings 150 also includes a flat third bearing 160 that operates with each of the flat bearings 127 in an articulated fashion, generally similar to the articulation of the first set of bearings 120. In this embodiment, the flat third bearing 160 is also offset from the flat bearing to allow the flat third bearing 160 to run on a different portion 155b of the second rail 155.

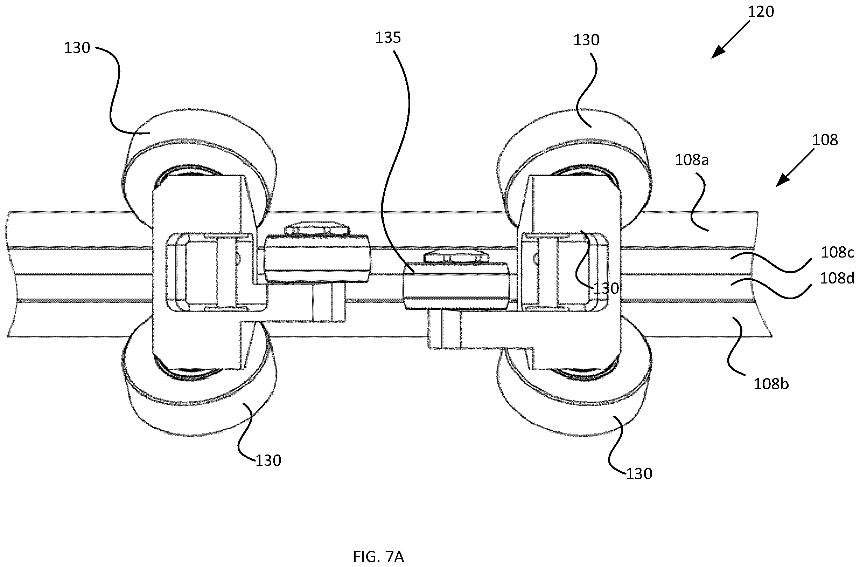

Figure 7A illustrates an alternate embodiment of a first set of bearings 120 of a bearing system 115 in which the centrally positioned third bearings 135 associated with each of the pairs of canted bearings 130 are offset from each other and are on separate portions 108c, 108d of the rail 108 rather than on a single in-line rail 108. This arrangement can further reduce wear on the rail 108, particularly on a curved track, and can also allow for differences in curvature as between the two sets of canted bearings 130.

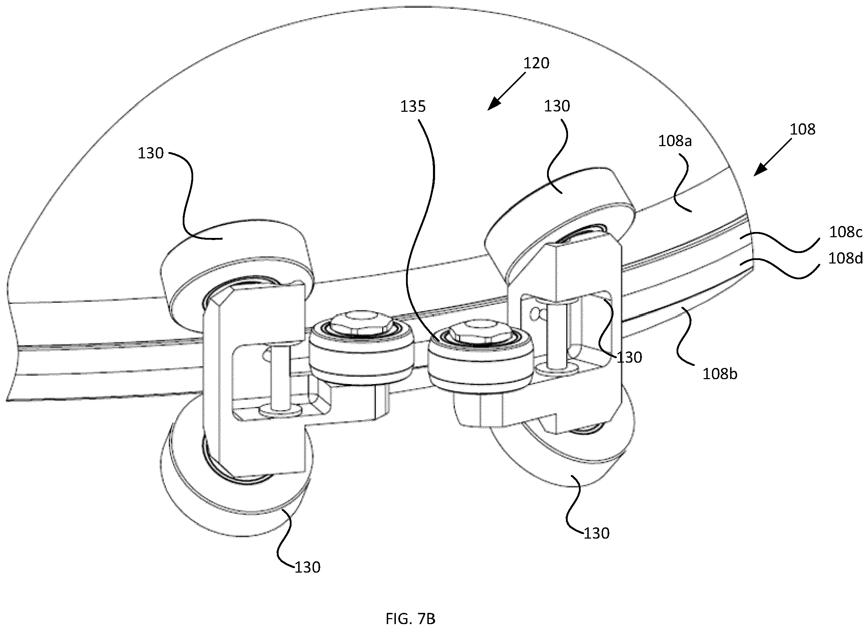

Figure 7B is a perspective view that illustrates the bearing system of Fig. 7A on a curved track section showing additional detail of the shape of the guide rail 108, including shaped surface rails 108a, 108b (sometimes called a first portion or first and third portion) and central bearing rails 108c, 108d (sometimes called a second portion). In some cases, the profile of rail portion 108c may be slightly different from that of rail portion 108d such that third bearings 135 are fully independent and can maintain the appropriate orientations of canted bearings 130 around a curve.

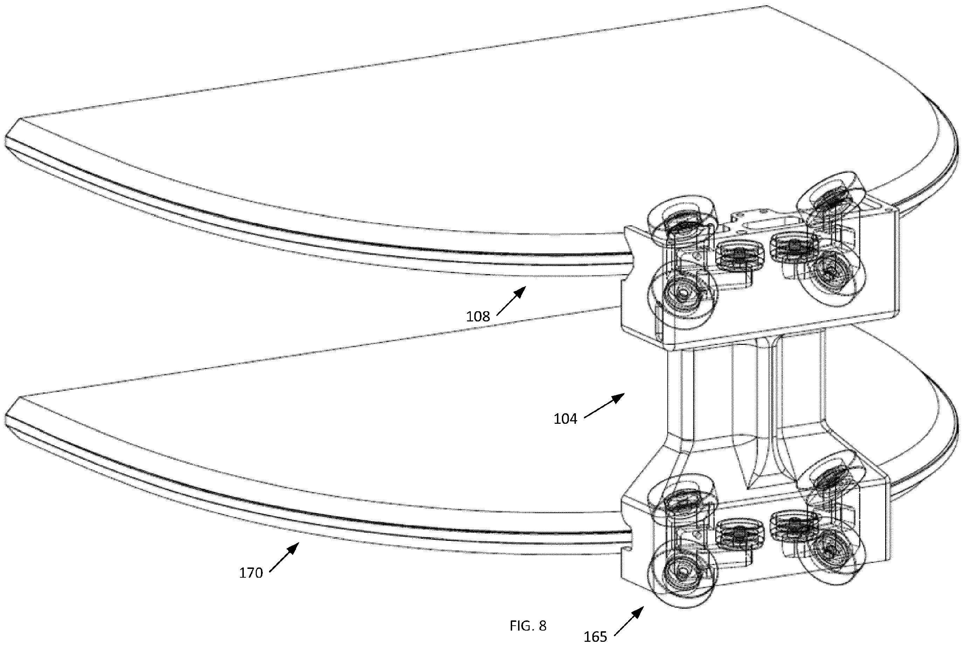

Figure 8 illustrates an embodiment of a moving element 104 in which the first set of bearings 120 is the same as in some previous embodiments. In this case, a second set of bearings 165 is configured to be similar or identical to the first set of bearings and a second guide rail 170 is configured to have a similar or identical shape or contour as the first guide rail 108. As seen in Fig. 8, the second set of bearings includes canted bearings and is articulated to operate on the shaped second guide rail 170. In this arrangement, the moving element 104 may have additional stability on the track due to the same configuration of rails and bearings in two locations (in this case, top and bottom). Such a configuration may also include vertical compliance of any two canted bearings sets to allow for stability between the moving element and the track.

It will be appreciated that, in other embodiments, the arrangement of the bearings may be varied or adjusted in various ways depending on the needs of the linear conveyor. For example, the first set of bearings 120 may have other configurations that engage the "V" shaped profile of the first guide rail 108. For example, the first set of bearings 120 may include two top downward-angled bearings spaced apart from a third central bottom upward-angled bearing rather than having pairs of downward and upward angled bearings. Alternatively, there may be two bottom upward-angled bearings spaced apart from a third central top downward-angled bearing. Further, the guide rails can be adjusted according to the configuration of the bearings and vice versa.

Generally speaking, in embodiments herein, it is intended that the articulated bearings provide for reduced friction between the bearings and the guide rails. In some cases, no lubricant may be required. In other cases, lubricant, for example, wet or dry lubricant may be used. For example, in some embodiments, unlike conventional linear motor conveyors, the bearings or the guide rails may be made of polymer materials with or without a coating of some nature.

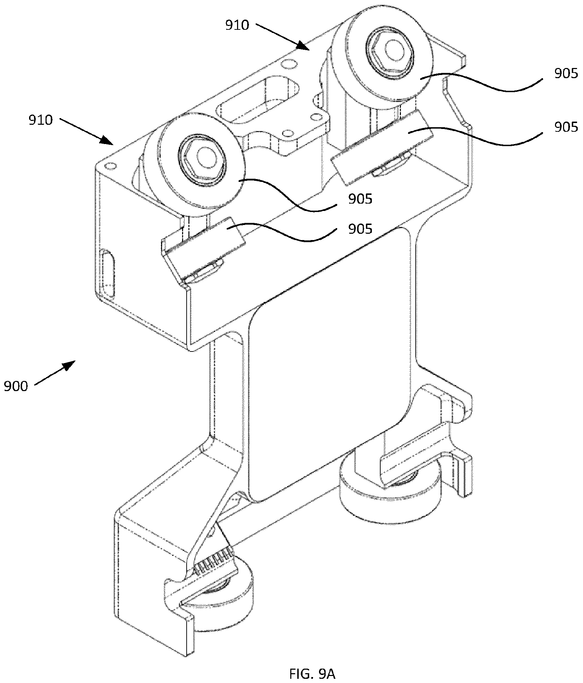

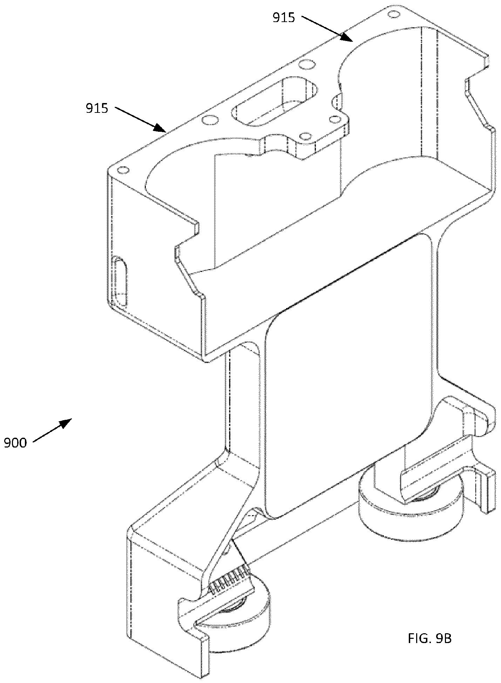

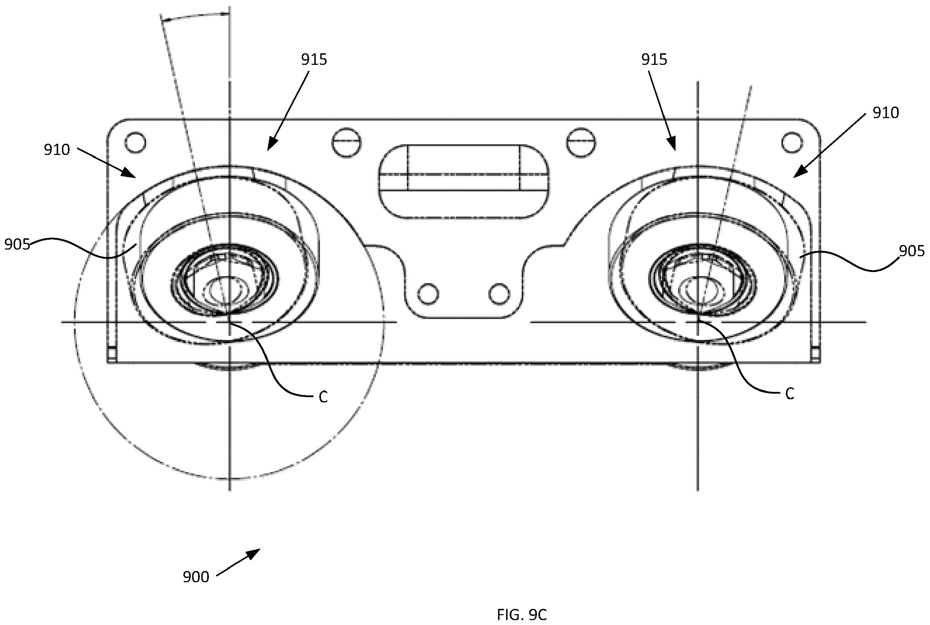

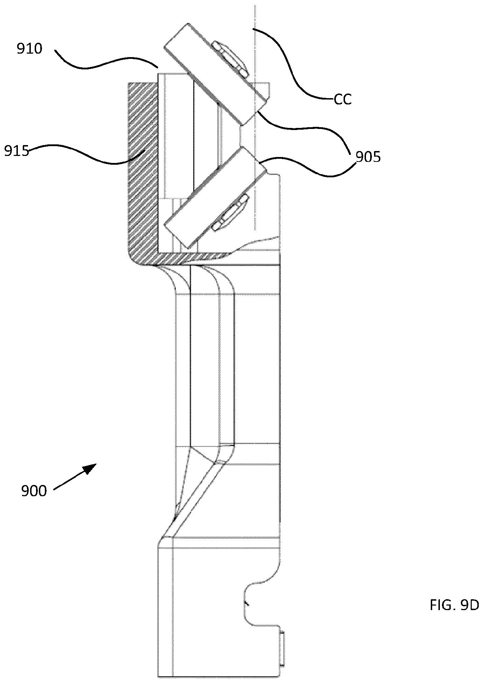

Figure 9A is a perspective view of another embodiment of a moving element 900 in which articulation of canted bearings 905 is provided by an articulation mechanism including a trunnion 910 provided between the moving element 900 and the canted bearings 905. Overall, the structure of the moving element is similar to that of other embodiments herein. Figure 9B is a perspective view of the moving element 900 of Fig. 9A with the canted bearings 905 and trunnion 910 removed. In Fig. 9B, it can be seen that the moving element 900 is provided with another aspect of the articulation mechanism, a trunnion support/surface 915, which provides a sliding surface for the trunnion 910 to move against. Figure 9C is a top view of the moving element 900 of Fig. 9A, illustrating movement of the trunnion 910 with respect to the concave-shaped trunnion support/surface 915 to allow for articulation of the canted bearings 905 in relation to the moving element 900. The trunnion support/surface 915 is in contact with the trunnion 910 that holds the canted bearings 905. The virtual pivot of the trunnion support/surface 915 (illustrated by the centre lines ("C") in Fig. 9C) is positioned at a center of contact ("CC" in Fig. 9D) of the canted bearings 905. Further, the canted bearings 905 are self-orienting so no additional steering surface is needed. Figure 9D is a side view of the moving element of Fig. 9A, illustrating the center of contact ("CC") of the canted bearings 905 on the rail (not shown). As with embodiments above, as the moving element 900 moves around a curve, the canted bearings 905 articulate so that the line of contact between the canted bearings and the rail remains at 90 degrees to the direction of travel of the moving element and parallel to the axis of rotation of each canted bearing.

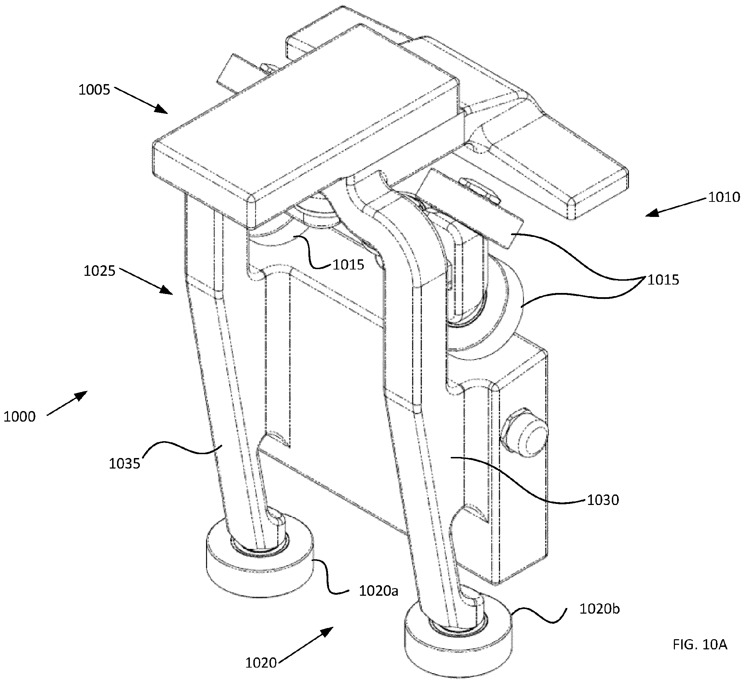

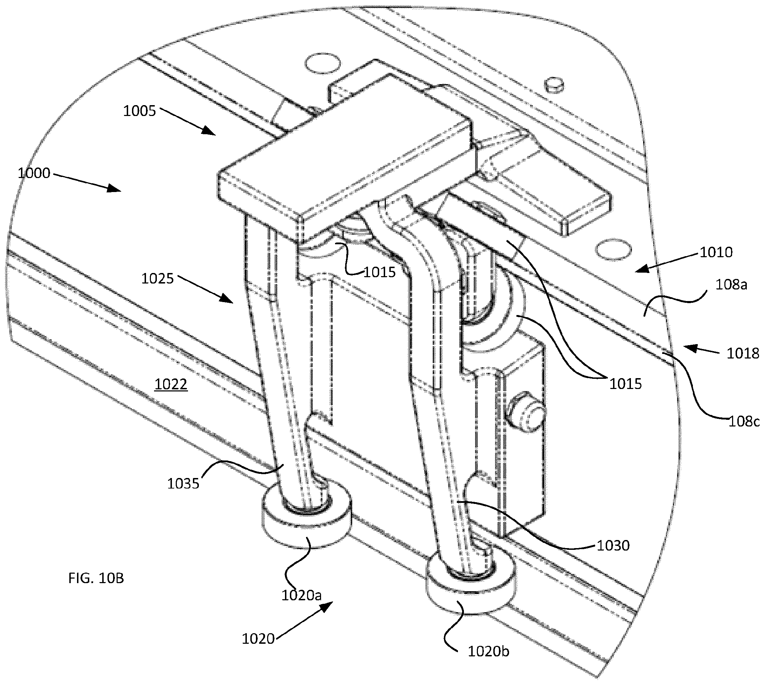

Figure 10A and 10B are perspective views of another embodiment of a moving element 1000. In this embodiment, a body 1005 of the moving element 1000 has a different configuration than other embodiments herein but the overall function is similar. For example, the moving element 1000 includes a first set of bearings 1010, including articulated canted bearings 1015, which contact a first rail 1018 (not shown in Fig. 10A) and a second set of bearings 1020, which contact a second rail 1022 (not shown in Fig. 10A). In this embodiment, each of the first set of bearings and each of the second set of bearings are supported by a flexible structure 1025, in this case, formed of a first leg 1030 and a second leg 1035. The flexible structure 1025 is intended to allow for some level of flexibility/movement/shock absorbing of the bearings vis-a-vis the other bearings to allow for alignment and machining tolerance issues that may exist on the rails. Various types of flexible structure will be apparent to one of skill in the art upon reading the present disclosure, including hinged, pneumatic, hydraulic and various other ways to provide an appropriate level of flexibility.

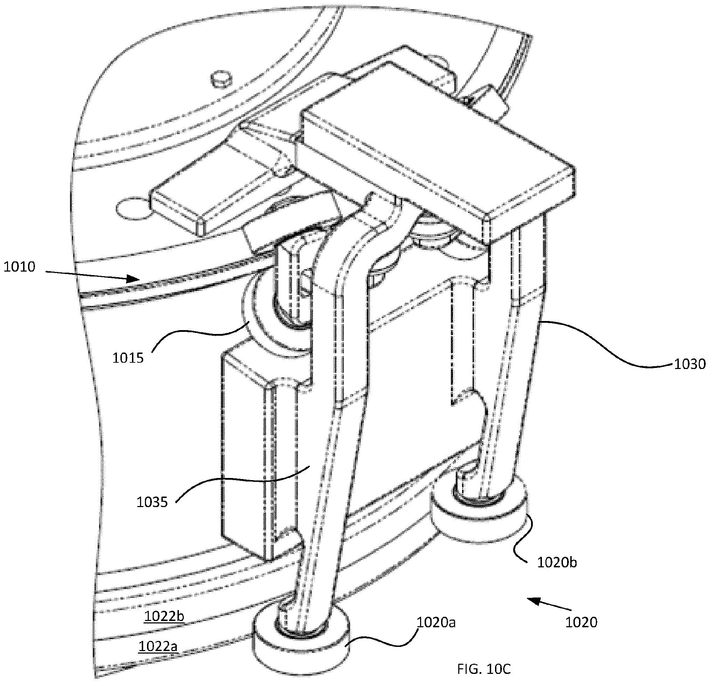

Figure 10B illustrates the moving element of Fig. 10A on a straight track section and Figure 10C illustrates the moving element of Fig. 10A on a curved track section, during which the canted bearings 1015 will articulate to move smoothly around the curve. Figure 10C also illustrates two independent profiles 1022a, 1022b of the second rail 1022 for each flat bearing 2020a, 2020b in the second set of bearings 1020. Independent profiles for the flat bearings 2020a, 2020b can assist with accommodation of differences between the two paths of the first set of bearings caused by the articulation of the canted bearings 1015.

In the preceding description, for purposes of explanation, numerous details are set forth in order to provide a thorough understanding of the embodiments. However, it will be apparent to one skilled in the art that these specific details may not be required. In other instances, well-known structures may be shown in block diagram form in order not to obscure the understanding. For example, specific details are not provided as to whether elements of the embodiments described herein are implemented as a software routine, hardware circuit, firmware, or a combination thereof.

Embodiments of the disclosure or components thereof can be provided as or represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor or controller to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor, controller or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A moving element for a conveyor system, the moving element comprising:
a body;
at least one canted bearing configured to abut against a first portion of a first guide rail of the conveyor system; and
an articulation mechanism provided to the moving element that allows the at least one canted bearing to rotate so that a line of contact of the at least one canted bearing with the first guide rail remains at 90 degrees to a direction of travel of the at least one canted bearing and parallel to an axis of rotation of the at least one canted bearing.

2. A moving element according to claim 1, further comprising at least one second bearing attached to the body and configured to abut against a second guide rail of the conveyor system.

3. A moving element according to any one of claims 1 to 2, wherein the articulation mechanism comprises at least one third bearing configured to abut against a second portion of the first guide rail and a bearing body connecting the at least one canted bearing and the at least one third bearing such that the bearing body is configured to rotate about an articulation axis.

4. A moving element according to any one of claims 1 to 2, wherein the articulating mechanism comprises a trunnion provided to the at least one canted bearing and a trunnion support provided to the moving element wherein a virtual pivot of the trunnion is positioned at a center of contact of the at least one canted bearing with the first guide rail.

5. A moving element according to any one of claims 1 to 4, wherein the at least one canted bearing comprises a top canted bearing and a bottom canted bearing and the first portion of the first guide rail comprises a top angled portion and a bottom angled portion wherein the top canted bearing abuts against the top angled portion and the bottom canted bearing abuts against a bottom angled portion.

6. A moving element according to claim 5 as it depends from claim 3, wherein the top angled portion, second portion and bottom angled portion of the guide rail form a "V" shaped profile.

7. A conveyor system comprising:
at least one track section comprising a first guide rail;
at least one moving element comprising:
a body;
at least one canted bearing configured to abut against a first portion of a first guide rail of the conveyor system; and
an articulation mechanism provided to the moving element that allows the at least one canted bearing to rotate so that a line of contact of the at least one canted bearing with the first guide rail remains at 90 degrees to a direction of travel of the at least one canted bearing and parallel to an axis of rotation of the at least one canted bearing.

8. A conveyor system according to claim 7, further comprising at least one second bearing attached to the body and configured to abut against a second guide rail of the conveyor system.

9. A conveyor system according to any one of claims 7 to 8, wherein the articulation mechanism comprises at least one third bearing configured to abut against a second portion of the first guide rail and a bearing body connecting the at least one canted bearing and the at least one third bearing such that the bearing body is configured to rotate about an articulation axis.

10. A conveyor system according to any one of claims 7 to 8, wherein the articulating mechanism comprises a trunnion provided to the at least one canted bearing and a trunnion support provided to the moving element wherein a virtual pivot of the trunnion is positioned at a center of contact of the at least one canted bearing with the first guide rail.

11. A conveyor system according to any one of claims 7 to 10, wherein the at least one canted bearing comprises a top canted bearing and a bottom canted bearing and the first portion of the first guide rail comprises a top angled portion and a bottom angled portion wherein the top canted bearing abuts against the top angled portion and the bottom canted bearing abuts against a bottom angled portion.

12. A conveyor system according to claim 11 as it depends from claim 9, wherein the top angled portion, second portion and bottom angled portion of the guide rail form a "V" shaped profile.

13. A conveyor system according to claim 7, comprising a plurality of the at least one canted bearing arranged in pairs and a plurality of the articulation mechanism, one for each pair of canted bearings.

14. A conveyor system according to claim 8, wherein the second bearing and the second guide rail have a flat profile.
